# EUROPEAN PATENT SPECIFICATION

(11) **EP 3 604 783 B1**
(45) Date of publication and mention of the grant of the patent: **27.12.2023**
(21) Application number: 19183878.8
(22) Date of filing: 02.07.2019
(51) Int. Cl.: F02K 3/06, F01D 25/26

(54) **GAS TURBINE ENGINE**
GASTURBINENTRIEBWERK
MOTEUR DE TURBINE À GAZ

(30) Priority: 01.08.2018 GB 201812553
(43) Date of publication of application: 05.02.2020
(73) Proprietor: Rolls-Royce plc, London N1 9FX (GB)
(72) Inventor: Swift, Andrew, Derby, Derbyshire DE24 8BJ (GB)
(74) Representative: Rolls-Royce plc

(56) References cited:
- EP-A2- 3 561 277
- US-A1- 2016 017 797
- US-A1- 2017 002 746

## Description

The present disclosure concerns a geared aircraft gas turbine engine.

Aircraft gas turbine engines typically comprise a gas turbine engine core and a core driven fan enclosed within a fan nacelle. Air flows through the fan in use, and is divided into two airflows downstream - a bypass flow and a core flow. The ratio between the mass flow rate of air in the bypass flow to the mass flow rate of airflow of the core flow is known as the bypass ratio. At subsonic flight velocities, a large bypass ratio is desirable for high efficiency.

Gas turbine engine efficiency can also be increased by increasing the Overall Pressure Ratio (OPR). High OPR results in high thermodynamic efficiency, and so low fuel burn. A high OPR can be achieved by increasing the number of compressor stages.

However, high OPR engine cores (having a large number of compressor stages) and / or high bypass ratios can result in relatively long engine cores. The high pressure ratio reduces the required air mass flow for a given engine power level, and therefore decreases the diameter of the compressor, particularly at the outlet. In combination, this drives gas turbine engine design towards long, thin cores. Such cores can be susceptible to flexing in flight, which can result in rotor blade tip rubs (potentially resulting in damage) and / or excessive blade tip clearances being required (resulting in an adverse impact on efficiency) for both engine core blades and fan blades. Increasing the engine core stiffness by using additional bracing can result in engine weight penalties, which again detracts from the overall aircraft level reduction in fuel consumption provided by high bypass ratios and / or high OPR.

The present disclosure seeks to provide an aircraft gas turbine engine that seeks to ameliorate or overcome some, or all, of these issues.

European patent publication EP3561277 discloses a gas turbine engine comprising, in axial flow sequence, a fan section, a compressor section, and a turbine section. The fan section has a fan that is enclosed by a fan casing. The turbine section is operatively connected to the compressor section. The gas turbine engine also comprises a planetary gear train, and a core engine casing. The gear train has a ratio of greater than approximately 3.0, with an input to the gear train being operatively connected to the compressor section, and an output from the gear train being operatively connected to the fan. The core engine casing encloses the compressor section and the turbine section. The fan has a diameter F, and the core engine casing has a diameter C. The core engine casing diameter C varies along an axial length of the core engine casing, and a ratio (C/F) of the core engine casing diameter C to the fan diameter F is within the range 0.2<(C/F)<0.4, along an axial length of the core engine casing.

US patent publication US2016017797 discloses a fan aircraft engine having a primary duct, including a combustion chamber, a first turbine disposed downstream of the combustion chamber, a compressor disposed upstream of the combustion chamber and coupled to the first turbine, and a second turbine disposed downstream of the first turbine and coupled via a speed reduction mechanism to a fan for feeding a secondary duct of the turbofan aircraft engine. A square of a ratio of a maximum blade diameter of the fan to a maximum blade diameter of the second turbine is at least 3.5, in particular at least 4.

US patent publication US2017002746 discloses a gas turbine engine including an engine core and core nacelle cowling coupled to the engine core. The engine core has a core member that extends radially outward from the engine core. The core nacelle cowling has a cowling member that extends radially inward towards the engine core. The cowling member is offset axially from the core member to form a labyrinth seal that bounds a coolant inlet, thereby fluidly coupling the fan duct flow of the gas turbine engine with a core compartment defined between the engine core and core nacelle cowling.

According to a first aspect there is provided an aircraft gas turbine engine comprising:
a compressor system comprising a low pressure compressor coupled to a low pressure shaft, and a high pressure compressor coupled to a high pressure shaft;
an inner core casing provided radially inwardly of compressor blades of the compressor system;
a fan coupled to the low pressure shaft via a reduction gearbox;
the high pressure compressor comprises an outer core casing arrangement provided radially outwardly of compressor blades of the high pressure compressor, the inner core casing and outer core casing arrangement defining a core working gas flow path therebetween; and
the outer core casing arrangement comprising a first outer core casing and a second outer core casing spaced radially outwardly from the first outer core casing and spaced radially inwardly from a bypass nacelle inner casing;
wherein, at an axial plane of an inlet to the high pressure compressor, the second outer core casing has a radius greater than 0.25 times a radius of the fan.

Accordingly, the structural load bearing second outer core casing has a relatively large radius, in spite of the relatively small radius of a high pressure compressor. This arrangement thereby provides a relatively stiff and structurally efficient structure, which in turn reduces bending for a given structural weight. In view of the stiff core structure, engine flexing is reduced in flight, thereby permitting reduced core rotor tip clearances, and improved reduction gearbox shaft and gear teeth alignment. Since the bending loads are in part produced by the fan, it has been found that it is important to maintain this relationship between the core outer casing and the fan diameter over a wide range of fan diameters and engine core diameters.

At the axial plane of the inlet to the high pressure compressor, the second outer core casing may have an inner radius at least 1.4 times the inner radius of the first outer core casing. Consequently, a relatively straight second outer core casing is provided, in spite of the large overall pressure ratio. Consequently, a structurally stiff second outer core casing is provided, whilst minimising weight.

The low pressure compressor may comprise an inner core casing and an outer core casing. The engine may comprise a coupling arranged to couple the low pressure compressor outer core casing to the high pressure compressor second outer core casing. A ratio of a radius of the low pressure outer core casing at an axial position of a final rotor stage of the low pressure compressor to a radius of the high pressure second outer core casing at a first rotor stage of the high pressure compressor may be between 1 and 1.2. Advantageously, the low pressure compressor outer core casing has a similar radius to the high pressure compressor second outer core casing, such that rolling moment caused by radial offset of the high and low pressure outer core casings is reduced compared to the prior art.

The core compressors and fan may be configured to provide an overall pressure ratio in use of between 40 and 80.

The low pressure compressor may be configured to provide a pressure ratio in use of between 2 and 4.

The high pressure compressor may be configured to provide a pressure ratio in use of between 10 and 30.

The fan may be configured to provide a fan pressure ratio of between 1.3 and 1.5.

The fan and compressors may define a bypass ratio between 13 and 25.

The second outer core casing may have an inner diameter at the axial plane of an inlet to the high pressure compressor greater than or substantially equal to a mid-height diameter of a final stage stator of the low pressure compressor.

The low pressure compressor may comprise a multi-stage axial compressor having between two and four stages.

The high pressure compressor may comprise between 8 and 12 stages, and may comprise 10 stages.

The engine may comprise a high pressure turbine coupled to the high pressure compressor by a high pressure shaft. The engine may comprise a low pressure turbine coupled to the low pressure compressor by a low pressure shaft.

The reduction gearbox may be provided between the fan and the low pressure compressor. The reduction gearbox may comprise an epicyclic gearbox, and may comprise a planetary gearbox.

Embodiments will now be described by way of example only, with reference to the Figures, in which:
**Figure 1** is a sectional side view of a gas turbine engine;
**Figure 2** is a sectional side view of a reduction gearbox of the gas turbine engine of figure 1;
**Figure 3** is a sectional side view of a compressor section of the engine of figure 1;
**Figures 4a and 4b** **are** sectional side views of a prior compressor section and part of the compressor section of figure 3 respectively.

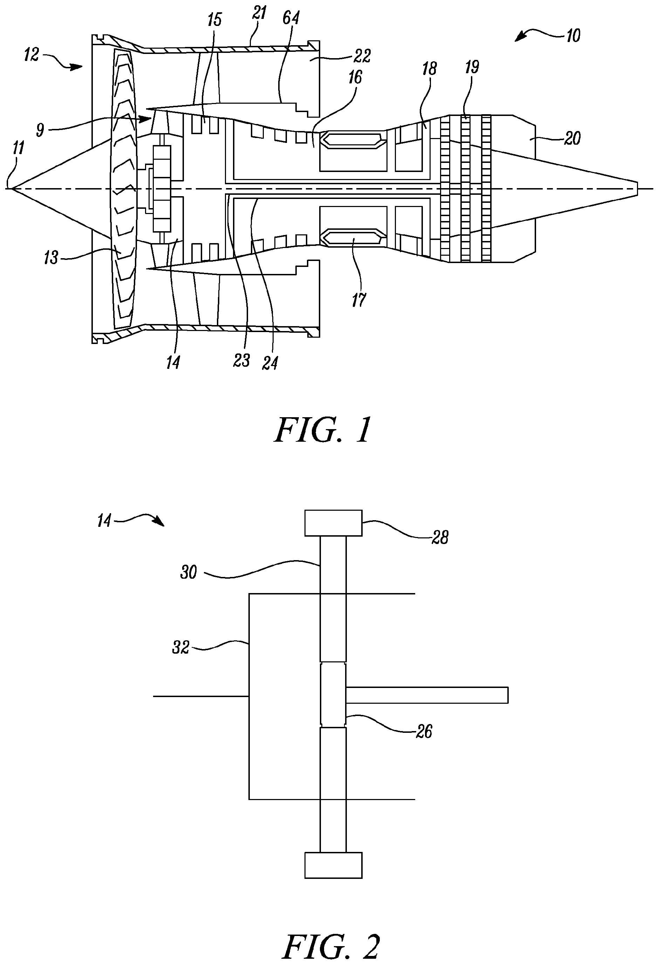

With reference to Figure 1, a gas turbine engine is generally indicated at 10, having a principal and rotational axis 11. The engine 10 comprises, in axial flow series, an air intake 12, a propulsive fan 13, a low pressure compressor 15, a high pressure compressor 16, combustion equipment 17, a high pressure turbine 18, a low pressure turbine 19 and a core exhaust nozzle 20. A nacelle 21 generally surrounds the engine 10 and defines the intake 12. A bypass passage inner casing 64 is also provided, which is spaced radially inwardly from the nacelle 21, and defines a bypass passage therebetween.

The gas turbine engine 10 works in the conventional manner so that air entering the intake 12 is accelerated by the fan 13 to produce two air flow paths: a first air flow path A into the core 9 of the engine, the low pressure compressor 15, the high pressure compressor 16 and downstream components, as a core flow; and a second air flow path B which passes through a bypass duct 22 to provide propulsive thrust as a bypass flow. A ratio of mass flows A:B defines a bypass ratio (BPR).The relative core and bypass mass flows may vary slightly in use, depending on aircraft velocity, altitude, engine power setting etc. In the described embodiment, the bypass ratio is 15 at mid-cruise (i.e. with the engine at a cruise throttle setting, at an altitude of between 30,000 and 40,000 feet (between 9144 meters and 12192 meters), at a Mach number of approximately 0.85 and the fan 13 has a fan pressure ratio of approximately 1.4 at this condition. Such a high bypass ratio results in a low specific thrust (i.e. maximum engine thrust in pounds force divided by total intake airflow rate in pounds per second) of between 7 and 10, and more typically around 8 to 9. Typically, the fan tip loading (i.e. the delta enthalpy in the bypass stream across the fan rotor divided by the fan entry tip rotational velocity squared) is between 0.28 and 0.35, and is more typically between 0.3 and 0.33. The low pressure compressor 15 compresses the air flow directed into it before delivering that air to the high pressure compressor 16 where further compression takes place.

The compressed air exhausted from the high pressure compressor 16 is directed into the combustion equipment 17 where it is mixed with fuel and the mixture combusted. The resultant hot combustion products then expand through, and thereby drive, the high and low pressure turbines 18, 19 before being exhausted through the nozzle 20 to provide additional propulsive thrust. The total thrust provided by both flows A, B is typically in the range of 35,000 to 130,000 pounds force (155688 N to 578269 N). The high pressure turbine 18 drives the high pressure compressor 16 by an interconnecting shaft, high pressure shaft 24. The low pressure turbine 19 drives the low pressure compressor 15 and fan 13 by an interconnecting shaft, low pressure shaft 23. An epicyclic gearbox 14 is coupled between the low pressure shaft 23 and the fan 13 so that the fan 13 rotates more slowly than the low pressure turbine 19 which drives it. The low pressure compressor 15 may be on either side of the epicyclic gearbox 14. If it is on the same side as the fan 13 it may be referred to as a booster compressor.

The epicyclic gearbox 14 is shown in figure 2. It comprises an externally toothed sun gear 26 and an internally toothed ring gear 28 which is concentric with the sun gear 26. An array of externally toothed planet gears 30, five as illustrated, are provided radially between the sun gear 26 and the ring gear 28. The teeth of the planet gears 30 intermesh with the teeth of the sun gear 26 and the ring gear 28. The planet gears 30 are held in fixed relationship to each other by a planet carrier 32. Each planet gear 30 is mounted to the planet carrier 32 by a bearing so that it is free to rotate about its own axis but cannot move relative to the planet carrier 32.

The epicyclic gearbox 14 is arranged in planetary configuration. Thus the drive input from the low pressure turbine 19 is received into the sun gear 26 and the drive output to the fan 13 is delivered from the planet carrier 32. The ring gear 28 is held stationary, not rotating. Thus when drive is delivered to the sun gear 26 the interaction of the teeth causes the planet gears 30 to rotate about their own axes and to precess (orbit) around the inside of the ring gear 28. The movement of the planet gears 30 around the ring gear 28 causes the planet carrier 32 to rotate. In this embodiment, the gearbox has a reduction ratio of approximately 3.5:1

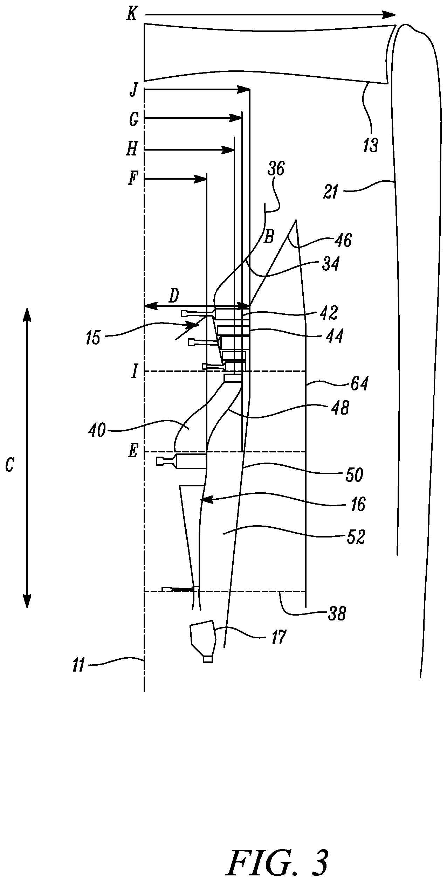

The low pressure compressor 15 and high pressure compressor 16 form a compressor section of the engine 10, which is shown in more detail in figure 3.

Each compressor 15, 16 of the compressor section comprises a respective multi-stage axial compressor, each stage comprising a respective compressor rotor 42 and stator 44. Each rotor 42 and stator 44 in turn comprises a plurality of blades. The low pressure compressor 15 comprises three compressor stages and provides a pressure ratio of approximately 3:1, whilst the high pressure compressor 16 comprises 10 compressor stages and provides a pressure ratio of approximately 15:1. Consequently, a high overall pressure ratio (OPR) of approximately 60:1 is provided by the large number of axial compressor stages and the fan. The OPR is defined by the ratio between the divided by the pressure at the compressor outlet (i.e. immediately upstream of the combustor) divided by the inlet pressure at the engine inlet (i.e. upstream of the fan). The geared fan architecture enables a high OPR with a relatively small diameter low pressure ratio low pressure compressor 15, and / or with a relatively small number of stages. This is because the low pressure compressor 15 rotational speed is decoupled from the fan 13 rotational speed (in view of the reduction gearbox 14), and so the low pressure compressor 15 can rotate at a relatively high speed, whilst the fan 13 rotates at a relatively low speed. This results in high tip speed for the low pressure compressor 15 rotor 42 for a given rotor diameter, and so a higher pressure ratio in comparison to a direct drive, two shaft gas turbine engine. Alternatively, the rotor tip diameter can be reduced for a given pressure ratio.

As a result of this combination of high OPR, high number of compressor stages, and relatively small compressor rotor tip diameter, a core compressor having a high aspect ratio (i.e. a high ratio of compressor section length C to compressor rotor maximum radius D) may result. In the present embodiment the compressor section aspect ratio is approximately 1.3, and may in general be between 1.2 and 1.5, or even higher. In view of this high aspect ratio core, the compressors 15, 16 may be susceptible to flexing in flight, which may result in reduced tip clearances, and so rotor tip damage. One solution to this problem would be to increase the rotor tip clearances, but this would reduce compressor efficiency. Alternatively, the compressor casing could be stiffened using additional material, but this would result in increased weight. The present disclosure on the other hand solves this problem as outlined below.

As noted above, the engine has a large fan 13, having a radius denoted by the line K. The relatively large fan radius K relative to the area B of the core inlet gives rise to a high bypass ratio.

The compressor section comprises a radially inner core wall 34, which is provided radially outwardly of the low and high pressure shafts 23, 24. The radially inner core wall 34 extends in a generally axial direction between a compressor inlet 36 downstream of the fan 13 and upstream of the low pressure compressor 15, to a compressor outlet 38 downstream of the high pressure compressor 16 and upstream of the combustor 17. The radially inner core wall 34 has a curved profile in axial cross-section. In general, the inner core wall 34 curves radially inwardly from the compressor inlet 36 to a front face of the low pressure compressor 15. The inner core wall 34 then extends radially outwardly through the low pressure compressor 15, before curving radially inwardly once more through a diffuser 40 located between the low pressure compressor 15 and high pressure compressor 16. The inner core wall 34 again extends radially outwardly through the high pressure compressor 16. The increase in radial extent of the radially inner core wall 34 through the compressors 15, 16 enables approximately constant rotor tip diameters and thereby ensures substantially constant compressor tip speed through the compressors 15, 16, whilst allowing for a reduction in cross sectional area through the compressors in a downstream direction. Meanwhile, the radially inward curvature upstream of each compressor 15, 16 is a result of the different rotational speeds of the low pressure and high pressure shafts 23, 24, which results in different tip diameters for the respective compressors 15, 16.

The compressor section further comprises a radially outer core wall 46. The radially outer core wall 46 is provided radially outwardly of the inner core wall 34, and the tips of the compressor rotors 42 and stators 44. An annular spacing between a radially outer surface of the inner core wall 34 and a radially inner surface of the outer core wall 34, 46 defines the core flow path B.

Again, the radially outer core wall 46 extends in a generally axial direction between the compressor inlet 36 downstream of the fan 13 and upstream of the low pressure compressor 14, to a compressor outlet 38 downstream of the high pressure compressor 15 and upstream of the combustor 17. The radially inner core wall 34 has a curved profile in axial cross-section. In general, the outer core wall 46 curves radially inwardly from the compressor inlet 36 to the front face of the low pressure compressor 15.

The radially outer core wall 46 extends generally axially through the low pressure compressor 15, and defines an inner surface of the outer core wall 46 having a generally constant radius through the low pressure compressor 15. The outer core wall 46 provides containment for the pressurised air within the core flow path B, and also provides structural support for the core.

Downstream of the low pressure compressor 15 and upstream of the high pressure compressor 16, radially outwardly of the diffuser 40, the outer core wall 46 bifurcates into first and second outer core casings 48, 50. In alternative arrangements, separate first and second outer core casings 48, 50 could also extend across the low pressure compressor. The first outer core casing 48 is provided radially inward of the second outer core casing 50, and a radially inner surface of the first outer core casing 48 defines the core air flow path B between the low pressure compressor 15 exit and the compressor outlet 38. The functions of the outer core wall 46 are also split at this point - the first outer core casing 48 provides containment of pressurised air within the compressor (and so is wholly annular, and generally air-tight, save for access for bleed ports), whereas the second outer core casing 50 may provide only structural support, and need not be wholly annular or air-tight, though in other embodiments both casings 48, 50 may provide both pressure containment and structural support. The first and / or second outer-core casings 48, 50 may be provided with bracing or support structures, such as ribs.

The first outer core casing 48 extends radially inward in a downstream direction through the diffuser 40. A bend in the first outer core casing 48 is provided at the downstream end of the diffuser 40, such that the first outer core casing 48 continues to extend radially inward through the high pressure compressor 16, though to a lesser extent.

On the other hand, the second outer core casing 50 is relatively straight, and extends radially inwardly in a downstream direction to a lesser extent than the first outer core casing 48. Consequently, an annular inter-casing gap 52 is defined by a radially outer surface of the first outer core casing 48 and a radially inner surface of the second outer core casing 50. In view of the relatively straight profile and increased diameter of the outer casing 50 relative to the inner core casing 48, the casing 50 is stiffer, and less susceptible to flexing in flight compared to where the second outer core casing 50 more closely follows the first outer core casing 48, or where only a single outer core casing providing both pressure containment and structural support is provided.

As a result of the above described shapes of the inner wall 34 and first and second outer casings 48, 50, various geometric parameters are defined. A leading edge of the first high pressure compressor rotor defines an inlet to the high pressure compressor 16. At an axial plane E of the inlet to the high pressure compressor 16, the first outer core casing 48 defines an inner radius F, while at the same axial plane, the second outer core casing 50 defines an inner radius G. As described above, the fan 13 also defines a fan radius K as measured from the central axis 11 to a radially outer tip of the fan 13 in the radial plane. A ratio of the fan radius K to the radius of the second outer core casing G is less than 4. In other words, the radius of the second outer core casing 50 is at least 0.25 times the radius of the fan 13. Preferably, the radius of the second outer core casing 50 is not more than 0.35 times the radius of the fan 13, and may be no more than 0.3 times the radius of the fan 13. Similarly, a ratio of the radius G to the radius F is at least 1.4, and in the present embodiment is approximately 1.47. In general, the ratio G:F may be as high as 1.7. Similarly, at the axial plane E, the inner surface of the second core outer casing 50 has a radial extent G greater than a mid-height H of a trailing edge (at axial plane I) of a final (i.e. axially rearmost) rotor blade of the low pressure compressor 15. Similarly, at the axial plane I, the second outer core casing 50 has an inner radius J. A ratio J to F is approximately 3.2, and is generally at least 2.5 and may be up to 4.

In view of these parameters, a small diameter pressure vessel (i.e. the first outer core casing 48) can be provided for the high pressure compressor 16. Consequently, the pressure vessel has high strength and low weight in view of its dimensions (the stresses imposed on the pressure vessel are largely in the form of hoop stresses). On the other hand, the dimensions of the structural support (i.e. the second outer core casing 50) are unconstrained by the dimensions of the first outer core casing 48, and so a larger diameter, straighter (and therefore stronger and stiffer) structural support can be provided.

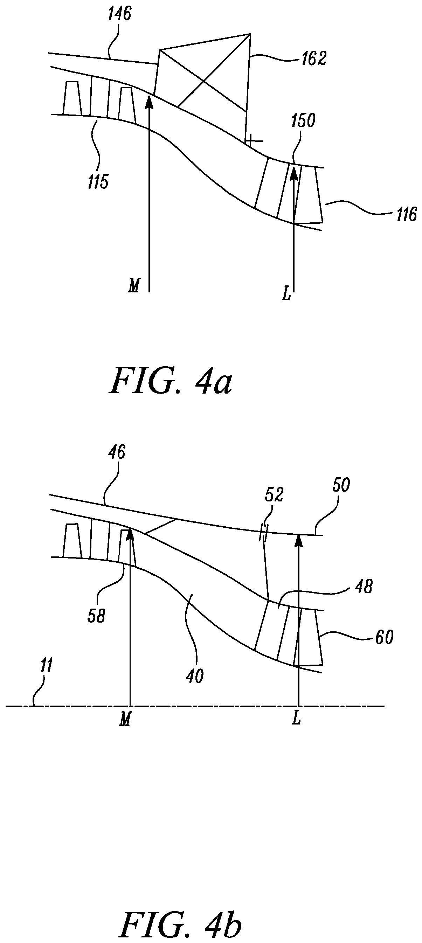

Referring to figure 4b, an upstream end of the second outer core casing 50 of the outer casing arrangement is bolted to a downstream end of the outer core casing radially outward of the diffuser section 40 by a coupling 56. The outer core casing 46 at the axial position of a trailing edge of a final rotor stage 58 of the low pressure compressor 15 is provided radially outward of the second core outer core casing 50 at the axial position of the leading edge of a first rotor stage 60 of the high pressure compressor 16. In other words, a radius L of the outer core casing at the axial position of the final rotor stage 58 of the low pressure compressor 15 is greater than a radius M of the second core outer core casing 50 at the axial position of the first rotor stage 60 of the high pressure compressor 16. In this case however, the ratio L/M is relatively low compared to prior engines, and is generally between 1 and 1.2. in some cases, the ratio is between 1 and 1.1.

In contrast, figure 4a shows a conventional arrangement of conventional high and low pressure compressors 115, 116. As can be seen, the M/L ratio is much larger, such that a low pressure ratio outer casing 146 is at a much larger radius than a core casing 150 of the high pressure compressor 16. As can be seen, in view of this arrangement, additional bracing structure 162 is required to provide adequate strength. This is necessary, since the bending loads on this part of the compressor are very large, and the stiffness of this part of the compressor is very low, in view of the bend in the compressor outer casing structure at this point. Consequently, the arrangement of the present disclosure provides an improved, lower weight structure.

It will be understood that the invention is not limited to the embodiments above-described and various modifications and improvements can be made without departing from the concepts described herein, provided they fall within the scope of the invention as defined by the appended claims.

By way of example such engines may have an alternative number of interconnecting shafts (e.g. three) and/or an alternative number of compressors and/or turbines.

Various parameters of the engine may be modified. For example, in general, the BPR may be between 13 and 25, and the OPR may be between 40 and 80. Consequently, the pressure ratios of the low and high pressure compressors may also vary, typically between 2 and 4:1, and 15 to 20:1 respectively. Similarly, the reduction gearbox may have a reduction ratio of between 3:1 and 5:1.

All references to "pressure" in the above shall be taken to refer to total pressure, unless otherwise stated. It will be understood that the drawings are representative of the general configuration, but are not necessarily to scale.

## Claims

1. An aircraft gas turbine engine (10) comprising:
a compressor system comprising a low pressure compressor (15) coupled to a low pressure shaft (23), and a high pressure compressor (16) coupled to a high pressure shaft (24);
an inner core casing (34) provided radially inwardly of compressor blades (42) of the compressor system;
a fan (13) coupled to the low pressure shaft (24) via a reduction gearbox (14);
the high pressure compressor (16) comprises an outer core casing arrangement provided radially outwardly of compressor blades of the high pressure compressor (16), the inner core casing (34) and outer core casing arrangement defining a core working gas flow path (B) therebetween; **characterised in that** the outer core casing arrangement comprises a first outer core casing (48) and a second outer core casing (50) spaced radially outward from the first outer core casing (48), and spaced radially inwardly from a bypass nacelle inner casing (64); wherein, at an axial plane (E) of an inlet to the high pressure compressor (16), the second outer core casing (50) has a radius greater than 0.25 times a radius of the fan (13).

2. An engine according to claim 1, wherein, at the axial plane (E) of the inlet to the high pressure compressor (16), the second outer core casing (50) has an inner radius at least 1.4 times the inner radius of the first outer core casing (48).

3. An engine according to claim 1 or claim 2, the low pressure compressor (15) comprises an inner core casing (36) and an outer core casing (46), a ratio of a radius of the low pressure outer core casing (46) at an axial position of a final rotor stage (58) of the low pressure compressor (15) to a radius of the high pressure second outer core casing (50) at a first rotor stage (60) of the high pressure (16) compressor is between 1 and 1.2

4. An engine according to any of the preceding claims, wherein the second outer core casing (50) has an inner diameter at the axial plane (E) of the inlet to the high pressure compressor (16) greater than or substantially equal to a mid-height diameter of a final stage stator of the low pressure compressor (15).

5. An engine according to any of the preceding claims, wherein the low pressure compressor (15) comprises a multi-stage axial compressor having between two and four stages.

6. An engine according to any of the preceding claims, wherein the high pressure compressor (16) comprises between 8 and 12 stages.

7. An engine according to any of the preceding claims, wherein the engine (10) comprises a high pressure turbine (18) coupled to the high pressure compressor (16) by the high pressure shaft (24), and a low pressure turbine (19) coupled to the low pressure compressor (15) by the low pressure shaft (23).

8. An engine according to any of the preceding claims, wherein the reduction gearbox (14) is provided between the fan (13) and the low pressure compressor (15).

9. An engine according to any of the preceding claims, wherein the reduction gearbox (14) comprises an epicyclic gearbox.

10. An engine according to claim 9, wherein the reduction gearbox (14) comprises a planetary gearbox.

## Patentansprüche

1. Luftfahrzeug-Gasturbinentriebwerk (10), umfassend:
ein Verdichtersystem, umfassend einen Niederdruckverdichter (15), der mit einer Niederdruckwelle (23) gekoppelt ist, und einen Hochdruckverdichter (16), der mit einer Hochdruckwelle (24) gekoppelt ist;
ein inneres Kerngehäuse (34), das radial einwärts von Verdichterschaufeln (42) des Verdichtersystems bereitgestellt ist;
einen Lüfter (13), der über ein Untersetzungsgetriebe (14) mit der Niederdruckwelle (24) gekoppelt ist;
wobei der Hochdruckverdichter (16) eine äußere Kerngehäuseanordnung umfasst, die radial auswärts von Verdichterschaufeln des Hochdruckverdichters (16) bereitgestellt ist, wobei das innere Kerngehäuse (34) und die äußere Kerngehäuseanordnung einen Kernarbeitsgasströmungsweg (B) dazwischen definieren; **dadurch gekennzeichnet, dass**
die äußere Kerngehäuseanordnung ein erstes äußeres Kerngehäuse (48) und ein zweites äußeres Kerngehäuse (50) umfasst, das radial auswärts von dem ersten äußeren Kerngehäuse (48) beabstandet ist und radial einwärts von einem inneren Bypass-Gondelgehäuse (64) beabstandet ist;
wobei das zweite äußere Kerngehäuse (50) in einer axialen Ebene (E) eines Einlasses zu dem Hochdruckverdichter (16) einen Radius aufweist, der größer ist als das 0,25-fache eines Radius des Lüfters (13).

2. Triebwerk nach Anspruch 1, wobei das zweite äußere Kerngehäuse (50) in der axialen Ebene (E) des Einlasses zu dem Hochdruckverdichter (16) einen Innenradius aufweist, der mindestens das 1,4-fache des Innenradius des ersten äußeren Kerngehäuses (48) ist.

3. Triebwerk nach Anspruch 1 oder Anspruch 2, wobei der Niederdruckverdichter (15) ein inneres Kerngehäuse (36) und ein äußeres Kerngehäuse (46) aufweist, ein Verhältnis eines Radius des äußeren Niederdruckkerngehäuses (46) an einer axialen Position einer letzten Rotorstufe (58) des Niederdruckverdichters (15) zu einem Radius des zweiten äußeren Hochdruckkerngehäuses (50) an einer ersten Rotorstufe (60) des Hochdruckverdichters (16) zwischen 1 und 1,2 ist

4. Triebwerk nach einem der vorherigen Ansprüche, wobei das zweite äußere Kerngehäuse (50) einen Innendurchmesser in der axialen Ebene (E) des Einlasses zu dem Hochdruckverdichter (16) aufweist, der größer als oder im Wesentlichen gleich wie ein mittlerer Höhendurchmesser eines Endstufenstators des Niederdruckverdichters (15) ist.

5. Triebwerk nach einem der vorherigen Ansprüche, wobei der Niederdruckverdichter (15) einen mehrstufigen Axialverdichter umfasst, der zwischen zwei und vier Stufen aufweist.

6. Triebwerk nach einem der vorherigen Ansprüche, wobei der Hochdruckverdichter (16) zwischen 8 und 12 Stufen umfasst.

7. Triebwerk nach einem der vorherigen Ansprüche, wobei das Triebwerk (10) eine Hochdruckturbine (18), die über die Hochdruckwelle (24) mit dem Hochdruckverdichter (16) gekoppelt ist, und eine Niederdruckturbine (19), die über die Niederdruckwelle (23) mit dem Niederdruckverdichter (15) gekoppelt ist, umfasst.

8. Triebwerk nach einem der vorherigen Ansprüche, wobei das Untersetzungsgetriebe (14) zwischen dem Lüfter (13) und dem Niederdruckverdichter (15) bereitgestellt ist.

9. Triebwerk nach einem der vorherigen Ansprüche, wobei das Untersetzungsgetriebe (14) ein Umlaufgetriebe umfasst.

10. Triebwerk nach Anspruch 9, wobei das Untersetzungsgetriebe (14) ein Planetengetriebe umfasst.

## Revendications

1. Moteur de turbine à gaz d'aéronef (10) comprenant :
un système de compresseur comprenant un compresseur basse pression (15) couplé à un arbre basse pression (23), et un compresseur haute pression (16) couplé à un arbre haute pression (24) ;
un carter de noyau interne (34) prévu radialement vers l'intérieur des aubes de compresseur (42) du système de compresseur ;
une soufflante (13) couplée à l'arbre basse pression (24) par l'intermédiaire d'un réducteur (14) ;
dans lequel le compresseur haute pression (16) comprend un agencement de carter de noyau externe prévu radialement vers l'extérieur des aubes de compresseur du compresseur haute pression (16), le carter de noyau interne (34) et l'agencement de carter de noyau externe définissant un trajet d'écoulement de gaz de service de noyau (B) entre eux ; **caractérisé en ce que**
l'agencement de carter de noyau externe comprend un premier carter de noyau externe (48) et un second carter de noyau externe (50) espacé radialement vers l'extérieur du premier carter de noyau externe (48), et espacé radialement vers l'intérieur d'un carter interne de nacelle de dérivation (64) ;
dans lequel, au niveau d'un plan axial (E) d'une entrée du compresseur haute pression (16), le second carter de noyau externe (50) comporte un rayon supérieur à 0,25 fois le rayon de la soufflante (13).

2. Moteur selon la revendication 1, dans lequel, au niveau du plan axial (E) de l'entrée vers le compresseur haute pression (16), le second carter de noyau externe (50) comporte un rayon interne au moins 1,4 fois le rayon interne du premier carter de noyau externe (48).

3. Moteur selon la revendication 1 ou la revendication 2, dans lequel le compresseur basse pression (15) comprend un carter de noyau interne (36) et un carter de noyau externe (46), un rapport d'un rayon du carter de noyau externe basse pression (46) au niveau d'une position axiale d'un étage de rotor final (58) du compresseur basse pression (15) à un rayon du second carter de noyau externe haute pression (50) au niveau d'un premier étage de rotor (60) du compresseur haute pression (16) est compris entre 1 et 1,2.

4. Moteur selon l'une quelconque des revendications précédentes, dans lequel le second carter de noyau externe (50) comporte un diamètre interne au niveau du plan axial (E) de l'entrée vers le compresseur haute pression (16) supérieur ou sensiblement égal à un diamètre à mi-hauteur d'un stator d'étage final du compresseur basse pression (15).

5. Moteur selon l'une quelconque des revendications précédentes, dans lequel le compresseur basse pression (15) comprend un compresseur axial multiétage comportant entre deux et quatre étages.

6. Moteur selon l'une quelconque des revendications précédentes, dans lequel le compresseur haute pression (16) comprend entre 8 et 12 étages.

7. Moteur selon l'une quelconque des revendications précédentes, dans lequel le moteur (10) comprend une turbine haute pression (18) couplée au compresseur haute pression (16) par l'arbre haute pression (24), et une turbine basse pression (19) couplée au compresseur basse pression (15) par l'arbre basse pression (23).

8. Moteur selon l'une quelconque des revendications précédentes, dans lequel le réducteur (14) est prévu entre la soufflante (13) et le compresseur basse pression (15).

9. Moteur selon l'une quelconque des revendications précédentes, dans lequel le réducteur (14) comprenant une boîte d'engrenages à trains épicycloïdaux.

10. Moteur selon la revendication 9, dans lequel le réducteur (14) comprenant une boîte d'engrenages à trains planétaires.
